# DEMANDE DE BREVET EUROPEEN

(11) **EP 2 511 066 A2**
(43) Date de publication de la demande: **17.10.2012**
(21) Numéro de dépôt: 12163810.0
(22) Date de dépôt: 11.04.2012
(51) Int. Cl.: B29C 45/27

(54) **Dispositif perfectionné de moulage par injection**

(30) Priorité: 13.04.2011 FR 1101130
(71) Demandeur: Faurecia Bloc Avant, 92000 Nanterre (FR)
(72) Inventeur: Verhaeghe, Fabrice, 25113 SAINTE MARIE (FR)
(74) Mandataire: Domenego, Bertrand

(57) **Abrégé**

Le dispositif (10) comporte une première partie de moule (12) comprenant au moins une empreinte de moulage (14) et un circuit (16) d'acheminement de matière à injecter jusqu'à l'empreinte de moulage (14). Le dispositif (10) comporte un organe de distribution (18), comprenant au moins une partie (24, 26, 28) du circuit d'acheminement (16). La première partie de moule (12) comporte un logement (20) pour l'organe de distribution (18). L'organe de distribution (18) est mobile dans le logement (20) entre une position escamotée de fonctionnement, dans laquelle le circuit d'acheminement (16) est propre à acheminer de la matière à injecter jusqu'à l'empreinte de moulage (14), et une position déployée de nettoyage, dans laquelle la partie (24, 26, 28) de circuit d'acheminement est accessible depuis l'extérieur de la première partie de moule (12).

## Description

La présente invention concerne un dispositif de moulage par injection.

On connaît déjà, dans l'état de la technique, un dispositif de moulage par injection, du type comportant une première partie de moule comprenant au moins une empreinte de moulage et un circuit d'acheminement d'une matière à injecter, jusqu'à cette empreinte de moulage.

Le circuit d'acheminement est généralement chauffé, de sorte que la matière circulant dans ce circuit conserve une fluidité satisfaisante.

Après une opération de moulage d'une pièce à l'aide de ce dispositif, de la matière résiduelle demeure dans le circuit d'acheminement. Or, dans certains cas, le dispositif est également utilisé pour une opération ultérieure de moulage de pièces dans une autre matière que la matière résiduelle. Par exemple, cette autre matière présente une couleur différente de celle de la matière résiduelle.

Ainsi, la matière résiduelle se mélange à l'autre matière injectée lors de cette opération ultérieure, altérant ainsi sa couleur, si bien que les pièces obtenues lors de cette opération de moulage ultérieure sont inutilisables tant que de la matière résiduelle demeure dans le circuit. Ce n'est que lorsque la matière résiduelle est totalement évacuée qu'il est possible de réaliser des pièces souhaitées.

Il en résulte donc à la fois un gaspillage de matière et une perte de temps correspondant à la réalisation des pièces inutilisables.

Un problème similaire se pose lorsque les pièces sont réalisées dans des matériaux incompatibles, par exemple lorsque l'une des matières est le polypropylène (PP), et l'autre matière est l'acrylonitrile butadiène styrène (ABS).

L'invention a notamment pour but de remédier à cet inconvénient, en fournissant un dispositif de moulage par injection permettant d'éviter les gaspillages en cas de changement de matière à injecter, notamment pour des matières incompatibles et/ou de couleurs différentes.

A cet effet, l'invention a notamment pour objet un dispositif de moulage par injection, du type comportant une première partie de moule comprenant au moins une empreinte de moulage et un circuit d'acheminement de matière à injecter jusqu'à l'empreinte de moulage, **caractérisé en ce que** :
- le dispositif comporte un organe de distribution, comprenant au moins une partie du circuit d'acheminement,
- la première partie de moule comporte un logement pour l'organe de distribution,
   et
- l'organe de distribution est mobile dans le logement entre une position escamotée de fonctionnement, dans laquelle le circuit d'acheminement est propre à acheminer de la matière à injecter jusqu'à l'empreinte de moulage, et une position déployée de nettoyage, dans laquelle la partie de circuit d'acheminement est accessible depuis l'extérieur de la première partie de moule, et
- la première partie de moule comporte des moyens de déplacement de l'organe de distribution, afin d'entraîner cet organe de distribution entre ses positions escamotée et déployée.

Lorsque l'organe de distribution est dans sa position déployée, le circuit d'acheminement est, au moins en partie, accessible depuis l'extérieur de la première partie de moule. Il est donc possible, après injection d'une première matière, de nettoyer le circuit d'acheminement en retirant la matière résiduelle qui y demeure.

Après ce nettoyage, l'organe de distribution est déplacé dans sa position escamotée de fonctionnement, afin de permettre l'injection d'une autre matière, sans qu'il demeure de matière résiduelle dans le circuit d'acheminement.

Un dispositif de moulage selon l'invention peut comporter en outre l'une ou plusieurs des caractéristiques suivantes, prises seules ou selon toutes les combinaisons techniquement possibles :
- les moyens de déplacement de l'organe de distribution comportent au moins un vérin relié à l'organe de distribution, afin d'entraîner cet organe de distribution entre ses positions escamotée et déployée ;
- le dispositif de moulage comporte un organe de régulation de température, comportant au moins un élément chauffant, et des moyens de circulation d'un fluide caloporteur, l'organe de régulation étant agencé sensiblement en contact de l'organe de distribution lorsque ce dernier est dans sa position escamotée ;
- l'organe de régulation est mobile entre une position escamotée dans le logement, dans laquelle cet organe de régulation est agencé sensiblement en contact de l'organe de distribution en position escamotée, et une position déployée dans laquelle au moins une partie de l'organe de régulation est accessible depuis l'extérieur de la première partie de moule ;
- la première partie de moule comporte des moyens de déplacement de l'organe de régulation, comprenant par exemple au moins un vérin relié à l'organe de régulation, afin d'entraîner cet organe de régulation entre ses positions escamotée et déployée ;
- au moins un vérin comporte une tige de vérin creuse, et au moins un orifice d'entrée d'un fluide caloporteur dans cette tige creuse ;
- le circuit d'acheminement comporte un orifice de fourniture de matière, ménagé dans la première partie de moule, débouchant dans le logement, un conduit d'acheminement, ménagé dans l'organe de distribution, communiquant avec l'orifice de fourniture lorsque l'organe de distribution est dans sa position escamotée de fonctionnement, un canal de distribution, ménagé dans l'organe de distribution, dans lequel débouche le conduit d'acheminement, au moins une canule de distribution, s'étendant dans l'organe de distribution depuis le canal de distribution jusqu'à un orifice de sortie de l'organe de distribution, et au moins une rainure de distribution, ménagée au moins en partie sur l'organe de distribution, dans laquelle débouche la canule de distribution, s'étendant jusqu'à l'empreinte de moulage ;
- le conduit d'acheminement, le canal de distribution et la canule de distribution, sont délimités seulement en partie par l'organe de distribution, de sorte que leurs intérieurs soient accessibles lorsque cet organe de distribution est en position déployée ;
- le conduit d'acheminement, le canal de distribution et la canule de distribution sont délimités, d'une part, par l'organe de distribution et, d'autre part, par l'organe de régulation ;
- le logement présente des parois inclinées de façon à présenter une section transversale en forme de V, et l'organe de distribution présente une face inclinée complémentaire d'une paroi inclinée du logement, cet organe de distribution étant mobile dans la direction de l'inclinaison de cette paroi inclinée.

L'invention sera mieux comprise à la lecture de la description qui va suivre, donnée uniquement à titre d'exemple et faite en se référant aux figures annexées, parmi lesquelles :
- la figure 1 est une vue en perspective d'un dispositif de moulage par injection selon un exemple de mode de réalisation de l'invention ;
- la figure 2 est une vue similaire à la figure 1 du dispositif de moulage, dans lequel l'organe de distribution est dans une position déployée ;
- la figure 3 est une vue de profil du dispositif de moulage de la figure 1, selon une première direction ;
- la figure 4 est une vue de profil, similaire à celle de la figure 3, du dispositif de moulage de la figure 2 ; et
- la figure 5 est une vue de profil selon une seconde direction, perpendiculaire à la direction dans laquelle est vue la figure 4.

On a représenté sur les figures un dispositif 10 de moulage par injection. En particulier, on a représenté une première partie 12 de moule, comprenant notamment une surface supérieure 12A comportant au moins une, par exemple deux empreintes de moulage 14.

Le dispositif de moulage 10 comporte également une seconde partie de moule de type classique, qui n'est pas représentée sur les figures.

Conformément à l'exemple décrit, la première partie de moule 12, également appelée matrice, comporte des empreintes 14 femelles, et la seconde partie de moule, également appelée poinçon, comporte des empreintes mâles, complémentaire des empreintes 14 femelles.

La première partie de moule 12 comporte un circuit 16 d'acheminement de matière à injecter jusqu'aux empreintes de moulage 14. La première partie de moule 12 comporte notamment un organe 18 de distribution, comprenant au moins une partie de ce circuit d'acheminement 16. Par ailleurs, la première partie de moule 12 comporte un logement 20 pour cet organe de distribution 18.

De préférence, l'organe de distribution 18 présente une forme générale de tétraèdre allongé dans une direction longitudinale.

L'organe de distribution 18 comporte notamment une face supérieure 18C et une face inférieure 18D opposée et sensiblement parallèle à la face supérieure, ainsi qu'une première face latérale 18A, perpendiculaire aux faces supérieure 18C et inférieure 18D, et une seconde face latérale inclinée 18B opposée à la première.

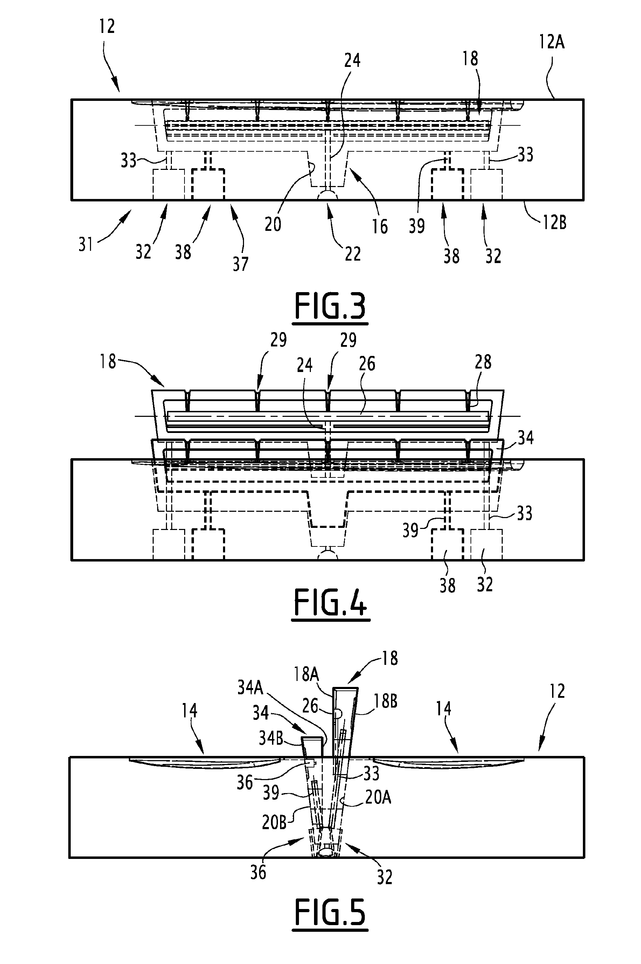

Comme cela est représenté sur la figure 5, le logement 20 présente une première paroi 20A inclinée complémentaire de la face latérale inclinée 18B, contre laquelle cette la face latérale inclinée 18B est susceptible de reposer en contact.

Le circuit d'acheminement 16 comporte un orifice 22 de fourniture de matière, ménagé dans la première partie de moule 12 et débouchant dans le logement 20. Conformément à l'exemple décrit, l'orifice 22 de fourniture de matière est ménagé sur une surface inférieure 12B de la première partie de moule 12, opposée et sensiblement parallèle à la surface supérieure 12A. Cet orifice de fournitures de matières 22 est adapté pour recevoir un nez de buse de fourniture de matière à injecter.

Le circuit d'acheminement 16 comporte également un conduit d'acheminement 24, ménagé dans l'organe de distribution 18, notamment dans sa première face latérale 18A, et s'étendant jusqu'à sa face inférieure 18B, de façon à communiquer avec l'orifice de fourniture 22 lorsque l'organe de distribution 18 est logé dans le logement 20. Ce conduit d'acheminement 24 s'étend par exemple perpendiculairement aux faces inférieure 18D et supérieure 18C de l'organe de distribution 18.

Le conduit d'acheminement 16 comporte ensuite un canal 26 de distribution, ménagé dans l'organe de distribution 18, notamment dans sa face latérale plane 18A, dans lequel débouche le conduit d'acheminement 24. Le canal de distribution 26 s'étendant avantageusement selon la direction longitudinale de l'organe de distribution 18.

Au moins une canule de distribution 28, par exemple cinq canules de distribution 28, s'étend dans l'organe de distribution 18, notamment dans sa face latérale plane 18A, depuis le canal de distribution 26 jusqu'à un orifice respectif de sortie 29 ménagé sur la face supérieure 18C de l'organe de distribution 18.

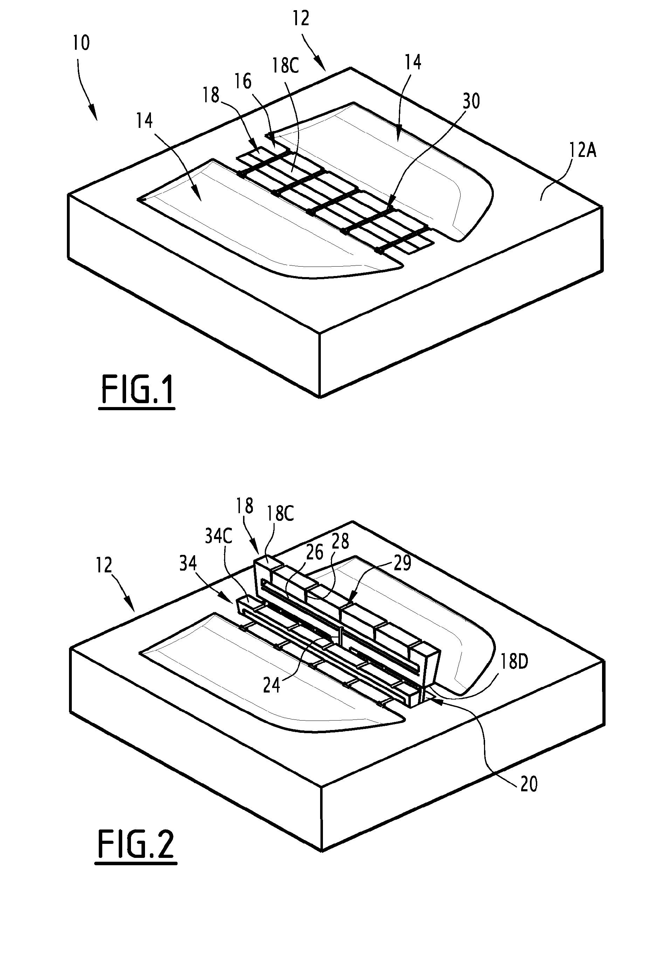

La surface supérieure 12A de la première partie de moule 12 comporte, pour chaque canule de distribution 28, une rainure de distribution 30, dans laquelle est ménagée l'orifice de sortie 29 correspondant. Chaque rainure de distribution s'étend de part et d'autre de l'orifice de sortie 29 jusqu'aux empreintes 14. Dans l'exemple représenté, chaque rainure de distribution 30 s'étend au moins en partie sur la face supérieure 18C de l'organe de distribution 18, comme cela est représenté sur la figure 1.

Comme cela est notamment représenté sur les figures 2, 4 et 5, le conduit d'acheminement 24, le canal de distribution 26 et chaque canule de distribution 28 sont délimités seulement en partie par l'organe de distribution 18, et sont délimités du reste par la première partie de moule 12.

Afin de permettre un accès à ces conduit 24, canal 26 et canules 28, la première partie de moule comporte des moyens de déplacement de l'organe de distribution 18 dans le logement 20, entre une position escamotée de fonctionnement, représentée sur les figures 1 et 3, et une position déployée de nettoyage, représentée sur les figures 2, 4 et 5.

Dans la position escamotée de fonctionnement, le circuit d'acheminement 16 est propre à acheminer de la matière à injecter depuis l'orifice d'introduction 22 jusqu'aux empreintes de moulage 14. En particulier, dans cette position escamotée, le conduit d'acheminement 24 communique avec l'orifice d'introduction 22, et la face supérieure 18C de l'organe de distribution 18 est sensiblement coplanaire avec la surface supérieure 12A de la première partie de moule.

Dans la position déployée de nettoyage, l'organe de distribution 18 est au moins en partie accessible depuis l'extérieur de la première partie de moule 12. Le conduit d'acheminement 24, le canal de distribution 26 et chaque canule de distribution 28 sont alors ouverts et leurs intérieurs sont accessibles depuis l'extérieur de la première partie de moule 12. Il est donc possible, après une opération de moulage, de retirer la matière résiduelle demeurant dans le conduit d'acheminement 24, le canal de distribution 26 et chaque canule de distribution 28, avant de procéder à une opération de moulage ultérieure utilisant une matière différente.

De préférence, les moyens de déplacement 31 comportent au moins un vérin 32, par exemple deux vérins 32 disposés chacun à proximité d'une extrémité longitudinale de l'organe de distribution 18. Chaque vérin 32 comporte une tige 33 reliée à l'organe de distribution 18, permettant l'entraînement en déplacement de cet organe de distribution 18 entre ses positions escamotées et déployées.

Avantageusement, la tige 33 de chaque vérin 32 est inclinée de sorte que l'organe de distribution 18 est mobile dans la direction de l'inclinaison de la première paroi inclinée 20A du logement 20.

De manière classique, la matière circulant dans le circuit d'acheminement 16 est chauffée, notamment afin de conserver une fluidité satisfaisante. A cet effet, le dispositif de moulages 10 comporte un organe 34 de régulation de température, comprenant au moins un élément chauffant 36, par exemple une résistance chauffante, et des moyens classiques de circulation d'un fluide caloporteur à proximité de cet élément chauffant 36. Cet organe de régulation 34 est agencé sensiblement en contact de l'organe de distribution 18 lorsque ce dernier est dans sa position escamotée.

L'organe de régulation 34 présente par exemple une forme générale de tétraèdre similaire à celle de l'organe de distribution 18.

L'organe de régulation 34 comporte notamment une face supérieure 34C et une face inférieure 34D opposée et sensiblement parallèle à la face supérieure 34C, ainsi qu'une première face latérale 34A, perpendiculaire aux faces supérieure 34C et inférieure 34D, et une seconde face latérale inclinée 34B opposée à la première.

Comme cela est représenté sur la figure 5, le logement 20 présente une seconde paroi 20B inclinée complémentaire de la face latérale inclinée 34B, contre laquelle cette la face latérale inclinée 34B est susceptible de reposer en contact. Ainsi, le logement 20 présente une section transversale en forme générale de V.

La première face latérale 34A est destinée à être disposée en contact avec la première face latérale 18A de l'organe de distribution 18, de façon à délimiter, avec cet organe de distribution 18, le conduit d'acheminement 24, le canal de distribution 26 et les canules de distribution 28.

Cette première face latérale 34A est généralement chauffée, par la résistance chauffante 36 et/ou le fluide caloporteur, de sorte que le conduit d'acheminement 24, le canal de distribution 26 et/ou les canules de distribution 28 soient chauffés.

On notera que les rainures de distribution 30 s'étendent également en partie sur la face supérieure 34C de l'organe de régulation 34, afin de permettre des accès à la matière depuis les orifices de sortie 29 jusqu'aux empreinte 14.

De préférence, l'organe de régulation 34 est avantageusement mobile entre une position escamotée dans le logement 20, représentée sur les figures 1 et 3, et une position déployée, représentés sur les figures 2, 4 et 5.

Dans sa position escamotée, l'organe de régulation 34 est agencé sensiblement en contact de l'organe de distribution 18 lorsque celui-ci est également en position escamotée. En particulier, leurs premières face 18A, 34B sont en contact l'une de l'autre, de façon à délimiter le conduit d'acheminement 24, le canal de distribution 26 et les canules de distribution 28. Par ailleurs, la face supérieure 34C de l'organe de régulation 34 est sensiblement coplanaire de la face supérieure 18C de l'organe de distribution 18 et de la surface supérieure 12A.

Dans sa position déployée, au moins une partie de l'organe de régulation 34 est accessible depuis l'extérieur de la première partie de moule 12, afin de faciliter des opérations de maintenance.

Afin de permettre le déplacement de l'organe de régulation, la première partie de moule 12 comporte des moyens de déplacement 37, comprenant au moins un vérin 38, par exemple deux vérins 38, chaque vérin 38 étant muni d'une tige 39, reliée à cet organe de régulation 34, propre à entraîner cet organe de régulation 34 entre ses positions escamotées et déployées.

Avantageusement, la tige 39 de chaque vérin 38 est inclinée de sorte que l'organe de régulation 34 est mobile dans la direction de l'inclinaison de la seconde paroi inclinée 20B du logement 20.

De préférence, les vérins 38 permettent un déploiement de l'organe de régulation 34 inférieur au déploiement de l'organe de distribution 18. Ainsi, on favorise l'accès au circuit de cheminement 16.

Conformément au mode de réalisation préférée, la tige 33, 39 d'au moins un vérin 32, 38 est creuse, afin de permettre le passage d'un fluide caloporteur dans cette tige creuse 33, 39. Dans ce cas, la tige creuse 33, 39 comporte au moins un orifice d'entrée du fluide caloporteur dans cette tige creuse 33, 39.

On notera que l'invention n'est pas limitée au mode de réalisation précédemment décrit, mais pourrait présenter diverses variantes sans sortir du cadre des revendications.

En particulier, l'organe de régulation 34 pourrait être fixe dans la première partie de moule 12.

Conformément à une autre variante, l'organe de régulation 34 pourrait être venu de matière avec la première partie de moule 12. Dans ce cas, seul l'organe de distribution 18 serait mobile dans le logement 20, ce logement 20 étant en partie délimité par l'organe de régulation 34.

## Revendications

1. Dispositif (10) de moulage par injection, du type comportant une première partie de moule (12) comprenant au moins une empreinte de moulage (14) et un circuit (16) d'acheminement de matière à injecter jusqu'à l'empreinte de moulage (14), **caractérisé en ce que** :
- le dispositif (10) comporte un organe de distribution (18), comprenant au moins une partie (24, 26, 28) du circuit d'acheminement (16),
- la première partie de moule (12) comporte un logement (20) pour l'organe de distribution (18), et
- l'organe de distribution (18) est mobile dans le logement (20) entre une position escamotée de fonctionnement, dans laquelle le circuit d'acheminement (16) est propre à acheminer de la matière à injecter jusqu'à l'empreinte de moulage (14), et une position déployée de nettoyage, dans laquelle la partie (24, 26, 28) de circuit d'acheminement est accessible depuis l'extérieur de la première partie de moule (12),
- la première partie de moule (12) comporte des moyens (31) de déplacement de l'organe de distribution (18), afin d'entraîner cet organe de distribution (18) entre ses positions escamotée et déployée.

2. Dispositif de moulage (10) selon la revendication 1, dans lequel les moyens (31) de déplacement de l'organe de distribution (18) comportent au moins un vérin (32) relié à l'organe de distribution (18).

3. Dispositif de moulage (10) selon la revendication 1 ou 2, comportant un organe (34) de régulation de température, comportant au moins un élément chauffant (36), et des moyens de circulation d'un fluide caloporteur, l'organe de régulation (34) étant agencé sensiblement en contact de l'organe de distribution (18) lorsque ce dernier est dans sa position escamotée.

4. Dispositif de moulage (10) selon la revendication 3, dans lequel l'organe de régulation (34) est mobile entre une position escamotée dans le logement (20), dans laquelle cet organe de régulation (24) est agencé sensiblement en contact de l'organe de distribution (18) en position escamotée, et une position déployée dans laquelle au moins une partie de l'organe de régulation (34) est accessible depuis l'extérieur de la première partie de moule (12).

5. Dispositif de moulage (10) selon la revendication 4, dans lequel la première partie de moule (12) comporte des moyens (37) de déplacement de l'organe de régulation (34), comprenant par exemple au moins un vérin (38) relié à l'organe de régulation (34), afin d'entraîner cet organe de régulation (34) entre ses positions escamotée et déployée.

6. Dispositif de moulage (10) selon la revendication 2 ou 5, dans lequel au moins un vérin (32, 38) comporte une tige de vérin (33, 39) creuse, et au moins un orifice d'entrée d'un fluide caloporteur dans cette tige creuse (33, 39).

7. Dispositif de moulage (10) selon l'une quelconque des revendications précédentes, dans lequel le circuit d'acheminement (16) comporte :
- un orifice (22) de fourniture de matière, ménagé dans la première partie de moule (12), débouchant dans le logement (20),
- un conduit d'acheminement (24), ménagé dans l'organe de distribution (18), communiquant avec l'orifice de fourniture (22) lorsque l'organe de distribution (18) est dans sa position escamotée de fonctionnement,
- un canal de distribution (26), ménagé dans l'organe de distribution (18), dans lequel débouche le conduit d'acheminement (24),
- au moins une canule de distribution (28), s'étendant dans l'organe de distribution (18) depuis le canal de distribution (26) jusqu'à un orifice (29) de sortie de l'organe de distribution (18), et
- au moins une rainure de distribution (30), ménagée au moins en partie sur l'organe de distribution (18), dans laquelle débouche la canule de distribution (28), s'étendant jusqu'à l'empreinte de moulage (14).

8. Dispositif de moulage (10) selon la revendication 7, dans lequel le conduit d'acheminement (24), le canal de distribution (26) et la canule de distribution (28), sont délimités seulement en partie par l'organe de distribution (18), de sorte que leurs intérieurs soient accessibles lorsque cet organe de distribution (18) est en position déployée.

9. Dispositif de moulage (10) selon la revendication 8 prise en combinaison avec l'une des revendications 3 à 5, dans lequel le conduit d'acheminement (24), le canal de distribution (26) et la canule de distribution (28) sont délimités, d'une part, par l'organe de distribution (18) et, d'autre part, par l'organe de régulation (34).

10. Dispositif de moulage (10) selon l'une quelconque des revendications précédentes, dans lequel le logement (20) présente des parois inclinées (20A, 20B) de façon à présenter une section transversale en forme de V, et l'organe de distribution (18) présente une face inclinée (18B) complémentaire d'une paroi inclinée (20A) du logement (20), cet organe de distribution (18) étant mobile dans la direction de l'inclinaison de cette paroi inclinée (20A).
